# EUROPÄISCHE PATENTSCHRIFT

(11) **EP 3 297 093 B1**
(45) Veröffentlichungstag und Bekanntmachung des Hinweises auf die Patenterteilung: **02.01.2019**
(21) Anmeldenummer: 16189158.5
(22) Anmeldetag: 16.09.2016
(51) Int. Cl.: H01P 5/08, G02B 6/42, H01P 5/02

(54) **STECKVERBINDER ZUM VERBINDEN EINER OPTISCHEN FASER UND EINES ELEKTRISCHEN LEITERS**
CONNECTOR FOR CONNECTING AN OPTICAL FIBER AND AN ELECTRICAL CONDUCTOR
CONNECTEUR A FICHES DESTINE A CONNECTER UNE FIBRE OPTIQUE ET UN CONDUCTEUR ELECTRIQUE

(43) Veröffentlichungstag der Anmeldung: 21.03.2018
(73) Patentinhaber: Rosenberger Hochfrequenztechnik GmbH & Co. KG, 83413 Fridolfing (DE)
(72) Erfinder: Rosenberger, Bernd, 84529 Tittmoning (DE)

(56) Entgegenhaltungen:
- EP-A1- 1 376 751
- WO-A1-2015/000594
- WO-A2-2015/000591
- JP-A- 2000 357 755
- Sean S Cahill ET AL: "Development of 100+ GHz High-frequency MicroCoax Wire Bonds", 39TH International Symposium on Microelectronics (IMAPS 2006), 11. Oktober 2006 (2006-10-11), Seiten 1-8, XP055348580, Gefunden im Internet: URL:http://processsolutionsconsulting.com/ pdf/Reliability/Cahill_IMAPS2006_paper.pdf [gefunden am 2017-02-22]
- Tanaka: "Bonding Wire Product Guide 2015-A", , 1. Januar 2015 (2015-01-01), Seiten 1-32, XP055349378, Gefunden im Internet: URL:https://web.archive.org/web/2015031623 2604/http://www.topline.tv/Bonding_Wire_Ca talog.pdf [gefunden am 2017-02-24]
- Anritsu: "Anritsu Microwave K Connector", , 1 November 2012 (2012-11-01), pages 1-1, XP055382635, Retrieved from the Internet: URL:https://dl.cdn-anritsu.com/en-us/test- measurement/files/Manuals/Instruction-Shee t/10100-00046B.pdf [retrieved on 2017-06-19]

## Beschreibung

### GEBIET DER ERFINDUNG

Die vorliegende Erfindung betrifft Steckverbinder, insbesondere zum Verbinden einer optischen Faser und eines elektrischen Leiters.

### TECHNISCHER HINTERGRUND

Die EP 1376751 A1 zeigt eine Verbindungsstruktur mit einer Leiterplatte, wenigstens einem elektrischen Steckkontakt, wenigstens einem koaxialen elektrischen Leiter, wobei der koaxiale elektrische Leiter an einem ersten Ende mit dem elektrischen Steckkontakt verbindbar ist.

Die WO 2015/0594 A1 zeigt eine Leiterplatte, wenigstens einen koaxialen elektrischen Leiter, welcher wenigstens einen Innenleiter, einen Außenleiter sowie ein Dielektrikum aufweist, wobei der koaxiale elektrische Leiter an einem zweiten Ende unmittelbar mit einem elektrischen Bauelement, welches auf der Leiterplatte angeordnet ist, verbindbar ist.

Sean S. Cahill et al., " Development of 100+ GHz Highfrequency MicroCoax Wire Bonds," 39th International Symposium on Microelectronics (IMAPS 2006), 11.10.2006, Seiten 1-8 offenbart die vorteilhafte Verwendung von koaxialen Bonddrahtverbindungen bei Hochfrequenzanwendungen im Millimeterwellenbereich.

Die US 2016/0218455 A1 zeigt einen QSFP-Stecker zum Verbinden einer optischen Faser mit einer elektrischen koaxialen Leitung. Demnach wird ein optisches Signal von einem QSFP-Stecker in ein elektrisches Signal umgewandelt. Die Druckschrift beschreibt, das umgewandelte elektrische Signal über geschirmte Kabel, vorzugsweise differenziell über Kontaktpaare auf ein twinaxiales Kabel, zu übertragen. Dabei ist das twinaxiale Kabel mittels eines Steckers mit einem Substrat in der Nähe eines elektrischen Bauelements verbunden. Die weitere Signalführung zum elektrischen Bauelement erfolgt durch Leiterbahnen in oder auf dem Substrat.

### ZUSAMMENFASSUNG DER ERFINDUNG

Vor diesem Hintergrund liegt der vorliegenden Erfindung die Aufgabe zugrunde, einen verbesserten Steckverbinder anzugeben, der für die Übertragung von Frequenzsignalen mit einer höheren Datenrate und einer Bandbreite von bis zu 100 GHz geeignet ist.

Erfindungsgemäß wird diese Aufgabe durch einen Steckverbinder mit den Merkmalen des Patentanspruchs 1 gelöst.

Die der vorliegenden Erfindung zugrundeliegende Idee besteht darin, die Verbindung von einem Bauelement auf einer Leiterplatte hin zu Steckkontakten durchgehend koaxial auszuführen. Bei einer durchgehenden koaxialen Signalübertragung ist die Signalintegrität, insbesondere die elektromagnetische Verträglichkeit deutlich verbessert. Bislang hat sich herausgestellt, dass Übertragungsfehler, die auf eine schlechte Signalintegrität zurückzuführen sind, besonders im Bereich von nicht koaxialen Steckkontakten bzw. Leitungen entstehen.

Bei bekannten Lösungen findet sich ein Bereich mit nicht koaxialen Leitungen häufig zwischen einer koaxialen Leitung und einem elektrischen Bauelement, indem die koaxiale Leitung mit einer nicht koaxialen Leiterbahn, welche mit einem elektronischen Bauelement verbunden ist, auf einer Leiterplatte verbunden ist.

Erfindungsgemäß ist jeweils ein elektrischer Leiter über mehrere elektrisch leitende Verbindungsflächen mit dem elektrischen Steckkontakt verbunden. Auf diese Weise ist eine besonders hohe Signalintegrität in einer Verbindung zwischen dem elektrischen Leiter und dem elektrischen Steckkontakt gewährleistet.

Dabei ist der Innenleiter des elektrischen Leiters über eine erste Verbindungsfläche mit dem Innenleiterkontakt kontaktiert sowie der Außenleiter über wenigstens eine zweite Verbindungfläche mit dem Außenleiterkontakt kontaktiert. Auf diese Weise ist eine durchgehende Schirmung der Leitung und des Steckkontakts gewährleistet. Dabei können die erste und zweite Verbindungsfläche beispielsweise mit dem elektrischen Leiter und den Steckkontakten verlötet sein.

Dabei sind die erste Verbindungsfläche, die eine Innenleiter-Verbindung bildet, und die zweite Verbindungsfläche, die eine Außenleiter-Verbindung bildet, durch ein Dielektrikum voneinander zu isoliert. Beispielsweise kann das Dielektrikum als Kunststoffschicht zwischen der ersten Verbindungsfläche und der zweiten Verbindungsfläche ausgebildet sein. Alternativ ist es denkbar, dass zunächst eine einheitliche Verbindungsfläche aufgetragen wird, welche in einem nachgelagerten Verfahrensschritt durch einen Lasergraben getrennt wird. Es versteht sich, dass auch Luft ein geeignetes Dielektrikum ist.

Erfindungsgemäß sind die erste Verbindungsfläche, das Dielektrikum und die zweite Verbindungsfläche übereinanderliegend angeordnet. Diese Schichtabfolge lässt sich beispielsweise herstellen, indem die erste Verbindungsfläche mit einem dielektrischen Kunststoff bedampft wird und eine weitere Metallisierung auf die Kunststoffschicht aufgebracht wird.

Erfindungsgemäß ist ferner vorgesehen, dass der Innenleiter, der Außenleiter, die erste Verbindungsfläche und die zweite Verbindungsfläche in dem Bereich, in dem der Innenleiter die erste Verbindungsfläche kontaktiert, im Wesentlichen parallel angeordnet sind.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Gemäß einer bevorzugten Weiterbildung der Erfindung beträgt der Durchmesser des elektrischen Leiters höchstens 100 µm, insbesondere höchstens 85 µm, weiter insbesondere höchstens 75 µm. Die genannten Durchmesser ermöglichen eine impedanzkontrollierte Übertragung des Signals von dem elektrischen Leiter auf ein elektrisches Bauelement auf der Leiterplatte, indem die genannten Durchmesser zu der Kontaktfläche eines elektrischen Bauelements auf der Leiterplatte passen.

Gemäß einer bevorzugten Weiterbildung ist der Steckkontakt nicht-planar ausgebildet. Nicht-planare koaxiale Steckkontakte weisen eine Schirmung des Innenleiterkontaktes durch den Außenleiterkontakt auf. Auf diese Weise kann die Datenrate sowie die Bandbreite weiter gesteigert werden.

Planare Steckkontakte sind beispielsweise GSG (Ground-Signal-Ground)-Flachkontakte. Bei GSG-Flachkontakten ist zwar ein Flachkontaktelement "Ground" an eine Masse bzw. den Außenleiter eines elektrischen Leiters angebunden, jedoch bildet das Flachkontaktelement "Ground" keinen Schirm für das Flachkontaktelement "Signal", welches an den Innenleiter angebunden ist.

Gemäß einer bevorzugten Weiterbildung ist der Leiter an dem zweiten Ende auf ein elektronisches Bauelement gebondet. Auf diese Weise wird eine Störstelle zwischen dem Leiter und dem Bauelement geringstmöglich gehalten.

Bei einem Steckverbinder mit mehreren Steckkontakten ist es besonders vorteilhaft, wenn die zweite Verbindungsfläche mehrere Außenleiterkontakte kontaktiert, beispielsweise kann die zweite Verbindungsfläche als Streifen ausgebildet sein, welcher sämtliche Außenleiterkontakte kontaktiert. Auf diese Weise kann die Herstellung eines erfindungsgemäßen Steckverbinders vereinfacht werden.

Alternativ kann die zweite Verbindungsfläche neben der ersten Verbindungsfläche ausgebildet sein, beispielsweise indem die Verbindungsflächen durch Graben getrennt sind.

Es versteht sich, dass die zweite Verbindungsfläche sowohl neben als auch über der ersten Verbindungsfläche ausgebildet sein kann, beispielsweise indem eine Metallisierung auf einem Dielektrikum über einen Durchkontakt mit einer darunter liegenden leitenden Schicht verbunden wird, sodass eine zusammenhängende zweite Verbindungsfläche entsteht.

Gemäß einer weiteren Ausführungsform der Erfindung ist der Innenleiter direkt auf den Innenleiterkontakt gebondet. Auf diese Weise kann eine besonders einfache Verbindung des Innenleiterkontaktes mit dem Innenleiter des elektrischen Leiters bereitgestellt werden. Darüber hinaus erstreckt sich eine mögliche Störstelle zwischen dem Innenleiter und dem Innenleiterkontakt auf einen kurzen Bereich.

Gemäß einer weiter bevorzugten Ausführungsform der Erfindung weist der Steckverbinder übereinandergestapelte Steckkontakte auf. Durch eine Stapelung der Steckkontakte in mehreren Etagen entsteht eine Differenz der Leitungslänge zwischen den oberen und den unteren Steckkontakten. Deshalb ist erforderlich, Mittel zur Kompensation eines Zeitversatzes des Signals zwischen den oberen und den unteren Steckkontakten vorzusehen. Ein solches Mittel zur Kompensation des Zeitversatzes ist beispielsweise die Variation des Dielektrikums zwischen dem Innenleiterkontakt und dem Außenleiterkontakt der unteren Steckkontakte. Auf diese Weise lässt sich die Bauform eines erfindungsgemäßen Steckverbinders besonders kompakt auslegen.

Gemäß einer weiteren bevorzugten Ausführungsform der Erfindung weist die Leiterplatte wenigstens einen Wandler zur Umwandlung eines optischen Signals in ein elektrisches Signal auf. Somit lässt sich ein von einem optischen zu einem elektrischen Signal gewandeltes Signal besonders vorteilhaft auf die Steckkontakte eines erfindungsgemäßen Steckverbinders übertragen. Ferner kann die Leiterplatte Wandler von elektrischen in optische Signale aufweisen.

Besonders vorteilhaft ist es dabei, wenn das optische Signal nach seiner Umwandlung zu einem elektrischen Signal stets über eine koaxiale Verbindung übertragen wird. Ferner wird ein elektrisches Signal, welches auf eine optische Faser übertragen werden soll, vor seiner Wandlung in ein optisches Signal durchgehend über eine koaxiale Verbindung übertragen.

Ein Anwendungsgebiet der erfindungsgemäßen Technologie sind elektrooptische Transceiver mit einem Steckverbinder nach einem der vorstehenden Ansprüche.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Figur 1: zeigt eine schematische Ansicht eines erfindungsgemäßen Steckverbinders;
- Figur 2: zeigt eine Detailansicht gemäß Figur 1;
- Figur 3: zeigt eine Detailansicht gemäß Figur 1;
- Figur 4: zeigt eine Detailansicht gemäß Figur 1;
- Figur 5: zeigt eine Detailansicht gemäß Figur 1;
- Figur 6: zeigt eine schematische Schnittsicht einer erfindungsgemäßen Steckverbindung;
- Figur 7: zeigt eine Detailansicht eines erfindungsgemäßen Steckverbinders;
- Figur 8: zeigt eine Detailansicht eines erfindungsgemäßen Steckverbinders;
- Figur 9: zeigt eine Detailansicht eines erfindungsgemäßen Steckverbinders;
- Figur 10: zeigt eine schematische Ansicht einer erfindungsgemäßen Steckverbindung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

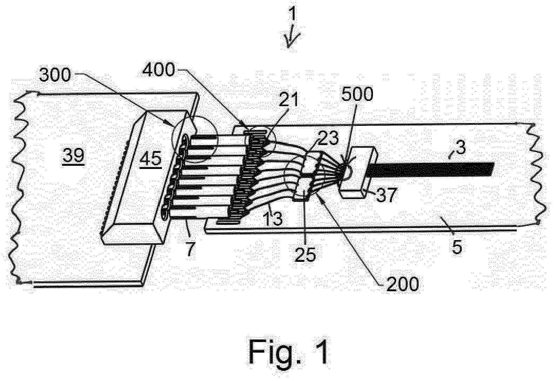

Figur 1 zeigt eine Steckverbindung mit einem erfindungsgemäßen Steckverbinder 1 in einer perspektivischen Ansicht. Der Steckverbinder 1 verbindet eine oder mehrere optische Fasern 3 mit koaxialen elektrischen Leiter 13, 7, 41.

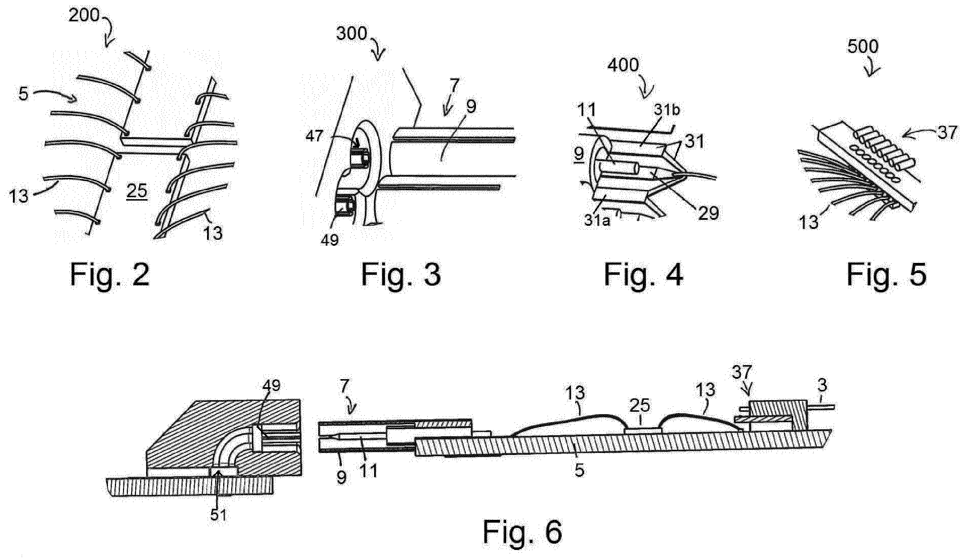

Hierfür weist der Steckverbinder 1 einen Wandler 37, welcher ein optisches Signal in ein elektrisches Signal sowie ein elektrisches Signal in ein optisches Signal umwandelt, auf. Der Wandler kann ein oder mehrere Elemente zur optischen Strahlführung wie Prismen sowie einen Laser oder Photodioden aufweisen. Der Wandler 37 ist über acht koaxiale elektrische Leiter 13 mit zwei elektrischen Bauelementen 25 verbunden. Eine Detailansicht 500 des Anschlussbereichs der koaxialen Leiter 13 an den Wandler 37 ist in Figur 5 dargestellt.

Das erste elektronische Bauelement 25, welches mit dem Wandler 37 über vier koaxiale Leiter 13 verbunden ist, ist als Sender bzw. Treiber ausgebildet. In dieser Ausführungsform handelt es sich um einen VCSEL-Treiber (vertical cavity surface emitting laser). Das zweite elektronische Bauelement 25, welches mit dem Wandler 37 über weitere vier koaxiale Leiter 13 verbunden ist, ist als Verstärker, sogenannter TIA (trans impedance amplifier) ausgebildet.

Eine weitere Detailansicht 200 bezüglich des Anschlussbereichs der koaxialen Leiter 13 an die elektrischen Bauelemente 25 ist in Figur 2 dargestellt.

Der Verstärker ist eingerichtet, ein elektrisches Signal zu verstärken.
Die elektronischen Bauelemente 25 sind mit den elektrischen Steckkontakten 7 des Steckverbinders 1 über acht koaxiale Leiter 13 verbunden. Die koaxialen Leiter 13 sind mit den acht Steckkontakten 7 jeweils über einen Verbindungsbereich verbunden.

Der Verbindungsbereich ist in einer Detailansicht 400 in Figur 4 dargestellt.

Die Steckkontakte 7 sind als koaxiale Steckkontakte ausgebildet. Sie weisen jeweils einen Innenleiterkontakt 11 sowie einen Außenleiterkontakt 9 auf.

Gleichwohl ist es auch denkbar, statt mehreren gesonderten Außenleiterkontakten 9 einen integralen Außenleiterkontakt für die Innenleiterkontakte 11 zu verwenden.

Die Steckkontakte 7 bilden einen männlichen Stecker, welche eingerichtet sind, mit einem weiblichen Steckverbinder 45 verbunden zu werden. Der Steckverbinder 45 ist auf einer zweiten Leiterplatte 39 montiert.

Eine Detailansicht 300 mit den männlichen Steckkontakten 7 und dem weiblichen Steckverbinder 45 ist in Figur 3 dargestellt.

Die koaxialen Leiter 13 weisen etwa einen Durchmesser von 70 µm auf. Diese äußerst dünnen koaxialen Leiter 13 ermöglichen eine durchgehende Verbindung zwischen dem Wandler 37 über Verstärker bzw. Treiber zu den Steckkontakten 7. Es hat sich herausgestellt, dass koaxiale Leitungen von gebräuchlichen Durchmessern nicht zur Anbindung an elektronische Bauelemente auf einer Leiterplatte geeignet sind, da deren Durchmesser häufig zu groß ist, um mit den elektronischen Bauelementen direkt verbunden zu werden. Bekannte Lösungen greifen deshalb auf elektrische Leiterbahnen auf einer Leiterplatte zurück, um eine Verbindung zu einem elektrischen Bauelement herzustellen, oder bonden gewöhnliche Bonddrähte auf elektronische Bauelemente.

Figur 2 zeigt die Detailansicht 200, die den Anschluss der koaxialen Leiter 13 an die elektronischen Bauelemente 25 perspektivisch darstellt. In Figur 2 ist ersichtlich, dass die koaxialen Leiter 13 direkt mit den elektronischen Bauelementen 25 verbunden sind. Dies ist aufgrund des geringen Durchmessers von etwa 70 µm der elektrischen Leiter 13 möglich, insbesondere da es häufig erforderlich ist mehrere koaxiale Leiter 13 an ein elektronisches Bauelement anzuschließen, woraus sich strenge Anforderungen an die Kompaktheit der koaxialen Leiter 13 ergeben.

Figur 3 zeigt die Detailansicht 300 gemäß Figur 1, welche die koaxialen Steckkontakte 47 samt den Innenleiterkontakten 49 des weiblichen Steckverbinders 45 dargestellt.

Figur 4 zeigt die Detailansicht 400 gemäß Figur 1, die einen Verbindungsbereich des elektrischen Leiters 13 und der koaxialen Steckkontakte 7 zeigt. Figur 4 zeigt, dass der elektrische Leiter 13 über mehrere Verbindungsflächen 29, 31, welche hier als metallische Streifen ausgebildet sind, mit den koaxialen Steckkontakten 7 verbunden ist. Eine erste Verbindungsfläche 29 verbindet den Innenleiterkontakt 11 eines Steckkontaktes 7 mit dem Innenleiter 15 des elektrischen Leiters 13.

Eine zweite Verbindungsfläche 31, welche 2 verbundene metallische Streifen 31a, 31b aufweist, verbindet den Außenleiterkontakt 9 des Steckkontaktes 7 mit dem Außenleiter 17 des elektrischen Leiters 13. Auf diese Weise ist ein impedanzkontrollierter Übergang zwischen dem elektrischen Leiter 13 und den Steckkontakten 7 gewährleistet. Es ist ersichtlich, dass der metallische Streifen 31a zwei Außenleiterkontakte 9 kontaktiert, wohingegen der metallische Streifen 31b lediglich einen Außenleiterkontakt 9 kontaktiert.

Die zweite Verbindungsfläche 31 kann alternativ auch als durchgehende metallische Fläche ausgebildet sein, wobei aus der metallischen Fläche eine erste Verbindungsfläche 29 ausgeschnitten ist und somit von der metallischen Fläche getrennt ist. Alternativ kann auch eine dielektrische Kunststoffschicht zwischen zwei übereinanderliegenden Verbindungsflächen 29 und 31 ausgebildet sein.

Figur 5 zeigt die Detailansicht 500 gemäß Figur 1. 500 zeigt den direkten Anschluss der elektrischen Leiter 13 an den Wandler 37, der ein optisches Signal in ein elektrisches Signal oder ein elektrisches Signal in ein optisches Signal umwandelt.

Figur 6 zeigt eine Schnittsicht einer Steckverbindung gemäß Figur 1 in einer schematischen Ansicht. In Figur 6 ist ersichtlich, dass die elektrischen Leiter 13 nicht eben auf der Leiterplatte 5 ausgebildet sind, sondern sich räumlich über der Leiterplatte 5 erstrecken und zwischen dem elektrischen Leiter 13 und der Leiterplatte 5 ein Zwischenraum ausgebildet ist. Auf diese Weise lässt sich zusätzlicher Bauraum für die Führung der Leiter 13 einsparen. Da die Signalführung über die Leiter 13 unabhängig vom Substrat erfolgt, ergeben sich verringerte technische Anforderungen an das Substrat in Bezug auf Material und Anzahl der Signallagen. Besonders können sich auch mehrere Leiter 13 kreuzen.

In Figur 6 ist der Steckverbinder 1 als gerader Stecker ausgebildet und der korrespondierende weibliche Steckverbinder 45 ist als Winkelstecker ausgebildet. Es versteht sich, dass alternativ der Steckverbinder 1 als Winkelstecker und der Steckverbinder 45 als gerader Stecker ausgebildet sein können. Die koaxialen Steckkontakte 47 des weiblichen Steckverbinders 45 sind mit einer weiteren koaxialen Leitung 51 verbunden.

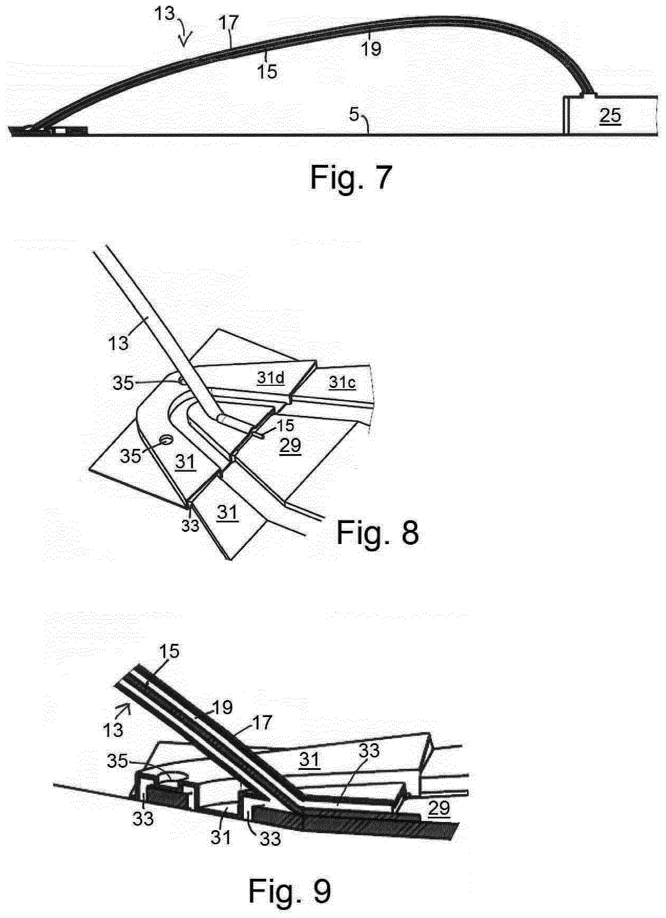

Figur 7 zeigt eine Detailansicht eines Querschnitts eines koaxialen elektrischen Leiters 13, welcher ein elektronisches Bauelement 25 mit elektrischen Steckkontakten 7 verbindet. Der Leiter 13 ist über erste und zweite Verbindungsflächen 29 und 31 gemäß Figur 8 mit den Steckkontakten 7 verbunden. Das elektrische Bauelement 25 ist auf der Leiterplatte montiert. In Figur 7 ist ersichtlich, dass der elektrische Leiter 13 einen Außenleiter 17, ein Dielektrikum 19, welches in Figur 7 als heller Strich dargestellt ist, und einen Innenleiter 15 aufweist.

Figur 8 zeigt eine perspektivische Ansicht eines Verbindungsbereichs zwischen einem elektrischen Leiter 13 und elektrischen Steckkontakten 7.

Figur 9 zeigt die Ansicht gemäß Figur 8 in einer Schnittsicht.

Der Innenleiter 15 des elektrischen Leiters 13 kontaktiert eine erste Verbindungsfläche 29, welche den Innenleiterkontakt 11 eines Steckkontaktes 7 kontaktiert.
Der Innenleiter 15, die erste Verbindungsfläche 29 sowie der neben der ersten Verbindungsfläche 29 angeordnete metallische Streifen 31c der zweiten Verbindungsfläche 31 sind von einer dielektrischen Kunststoffschicht 33, welche auf die genannten Teile aufgebracht ist, bedeckt. In der vorliegenden Ausführungsform stimmt die Kunststoffschicht 33 mit dem Dielektrikum 19 überein, indem die Kunststoffschicht 33 in dem gleichen Prozessschritt wie das Dielektrikum aufgebracht wurde. Auf der dielektrischen Kunststoffschicht 33 ist die Metallisierung 31d ausgebildet, welche elektrisch mit dem Außenleiter 17 des elektrischen Leiters 13 verbunden ist. Die Metallisierung 31d ist somit durch die dielektrische Kunststoffschicht 33 von dem Innenleiter 15 und der ersten Verbindungsfläche 29 isoliert. Die Metallisierung 31d ist über mehrere Druckkontakte 35 mit dem metallischen Streifen 31c, welcher neben der ersten Verbindungsfläche 29 ausgebildet ist und einen Außenleiterkontakt 9 kontaktiert, verbunden. Somit bilden die metallischen Streifen 31c, die Metallisierung 31d und der Durchkontakt 35 eine zusammenhängende zweite Verbindungsfläche 31. Der metallische Streifen 31c ist von der ersten Verbindungsfläche 29 räumlich getrennt und isoliert.

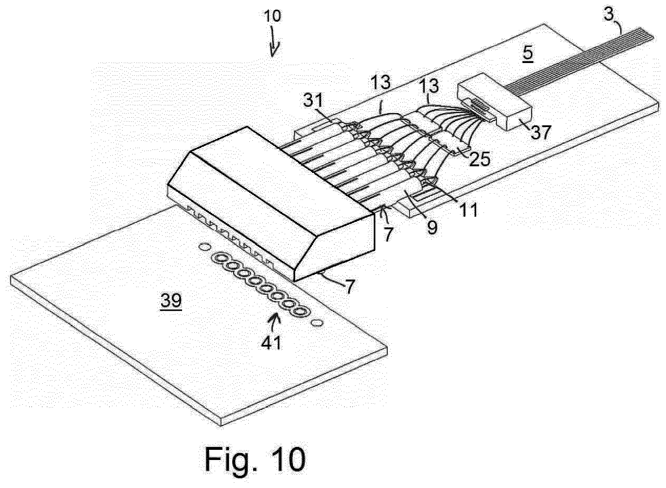

Figur 10 zeigt einen zu dem Steckverbinder 1 ähnlichen Steckverbinder 10. Der Steckverbinder 10 unterscheidet sich von dem Steckverbinder 1 dadurch, dass dieser als Winkelsteckverbinder ausgebildet ist. Dementsprechend kann der Steckverbinder 10 mit koaxialen geraden Steckkontakten 41 auf einer weiteren Leiterplatte 39 kontaktiert werden. Die Steckkontakte 41 sind mit koaxialen Leitungen (nicht dargestellt) verbunden, welche in der Leiterplatte 39 verlaufen. Obwohl die vorliegende Erfindung anhand bevorzugter Ausführungsbeispiele vorstehend vollständig beschrieben wurde, ist sie darauf nicht beschränkt, sondern im Rahmen des durch die Ansprüche definierten Schutzumfangs modifizierbar.

### Bezugszeichenliste

- 1: Steckverbinder
- 3: optische Faser
- 5: Leiterplatte
- 7: Steckkontakt
- 9: Innenleiterkontakt
- 10: Steckverbinder
- 11: Außenleiterkontakt
- 13: elektrischer Leiter
- 15: Innenleiter
- 17: Außenleiter
- 19: Dielektrikum
- 21: erstes Ende
- 23: zweites Ende
- 25: elektrisches Bauelement
- 29: erste Verbindungsfläche
- 31: zweite Verbindungsfläche
- 31a: metallischer Streifen
- 31b: metallischer Streifen
- 31c: metallischer Streifen
- 31d: Metallisierung
- 33: Dielektrikum
- 35: Durchkontaktierung
- 37: Wandler
- 39: Leiterplatte
- 41: koaxiale Kontakte
- 45: Steckverbinder
- 47: Steckkontakte
- 49: Innenleiterkontakt
- 51: koaxiale Leitung

- 200: Detailansicht
- 300: Detailansicht
- 400: Detailansicht
- 500: Detailansicht

## Patentansprüche

1. Steckverbinder (1) zum Verbinden einer optischen Faser (3) und eines elektrischen Leiters mit
- einer Leiterplatte (5), welche ein elektronisches Bauelement (25) aufweist;
- wenigstens einem elektrischen Steckkontakt (7), welcher jeweils wenigstens einen Innenleiterkontakt (11) und einen Außenleiterkontakt (9) aufweist;
- wenigstens einem koaxialen elektrischen Leiter (13), welcher wenigstens einen Innenleiter (15), einen Außenleiter (17) sowie ein Dielektrikum (19) aufweist;
wobei der koaxiale elektrische Leiter (13) an einem ersten Ende (21) mit dem elektrischen Steckkontakt (7) verbunden ist, wobei der koaxiale elektrische Leiter (13) an einem zweiten Ende (23) unmittelbar mit dem elektronischen Bauelement (25), welches auf der Leiterplatte (5) angeordnet ist, verbunden ist,
wobei der Innenleiter (15) des koaxialen elektrischen Leiters (13) über eine erste Verbindungsfläche (29) mit dem Innenleiterkontakt (11) kontaktiert ist, wobei der Außenleiter (17) über wenigstens eine zweite Verbindungsfläche (31) mit dem Außenleiterkontakt (9) kontaktiert ist,
wobei die erste Verbindungsfläche (29) von der zweiten Verbindungsfläche (31) durch ein Dielektrikum (33) isoliert ist, wobei die erste Verbindungsfläche (29), das Dielektrikum (33) und die zweite Verbindungsfläche (31) übereinanderliegend angeordnet sind,
wobei der Innenleiter (15), der Außenleiter (17), die erste Verbindungsfläche (29) und die zweite Verbindungsfläche (31) in einem Bereich, in dem der Innenleiter die erste Verbindungsfläche kontaktiert, im Wesentlichen parallel angeordnet sind.

2. Steckverbinder nach Anspruch 1, wobei der Durchmesser des koaxialen elektrischen Leiters (13) höchstens 100 µm, insbesondere höchstens 85 µm, weiter insbesondere höchstens 75 µm beträgt.

3. Steckverbinder nach einem der vorstehenden Ansprüche, wobei der Steckkontakt (7) nicht planar ausgebildet ist, insbesondere wobei der Außenleiterkontakt den Innenleiterkontakt umfänglich umgibt.

4. Steckverbinder nach einem der vorstehenden Ansprüche, wobei der koaxiale elektrische Leiter (13) an dem zweiten Ende auf das elektronische Bauelement gebondet ist.

5. Steckverbinder nach einem der vorstehenden Ansprüche, welcher mehrere Steckkontakte (7) aufweist, wobei die zweite Verbindungsfläche (31) die Außenleiterkontakte (9) mehrerer Steckkontakte (7, 8) kontaktiert.

6. Steckverbinder nach einem der vorstehenden Ansprüche, wobei mehrere zweite Verbindungsflächen (31) über eine Durchkontaktierung (35) durch das Dielektrikum (33) verbunden sind.

7. Steckverbinder nach einem der vorstehenden Ansprüche, wobei der Innenleiter (15) direkt auf den Innenleiterkontakt (11) gebondet ist.

8. Steckverbinder nach einem der vorstehenden Ansprüche, welcher wenigstens zwei Steckkontakte, die übereinander angeordnet sind, aufweist, wobei der Steckverbinder Mittel zur Kompensation eines Zeitversatzes zwischen Signalen zweier Steckkontakte aufweist.

9. Steckverbinder nach einem der vorstehenden Ansprüche, wobei die Leiterplatte (5) einen Wandler (37) zur Umwandlung eines optischen Signals in ein elektrisches Signal aufweist.

10. Steckverbinder nach Anspruch 9, wobei die Übertragung eines elektrischen Signals von dem Wandler (37) zu den elektrischen Steckkontakten stets über eine koaxiale Verbindung, insbesondere nicht planare Verbindung, erfolgt.

11. Optoelektronischer Transceiver mit einem Steckverbinder nach einem der vorstehenden Ansprüche.

12. Steckverbindung mit einem ersten Steckverbinder nach einem der Ansprüche 1 bis 10, welcher mit einer optischen Faser verbunden ist, und mit einem zweiten Steckverbinder mit koaxialen Steckkontakten, wobei der zweite Steckverbinder mit einem koaxialen Kabel verbunden ist.

## Claims

1. A plug connector (1) for connecting an optical fiber (3) and an electrical conductor with
- a circuit board (5), which has an electronic component (25);
- at least one electrical plug contact (7), which in each case has at least one inner conductor contact (11) and an outer conductor contact (9);
- at least one coaxial electrical conductor (13), which has at least one inner conductor (15), an outer conductor (17) as well as a dielectric (19);
wherein the coaxial electrical conductor (13) is connected at a first end (21) to the electrical plug contact (7),
wherein the coaxial electrical conductor (13) is connected at a second end (23) directly to the electronic component (25), which is arranged on the circuit board (5),
wherein the inner conductor (15) of the coaxial electrical conductor (13) is contacted by means of a first connecting surface (29) to the inner conductor contact (11),
wherein the outer conductor (17) is contacted by means of at least one second connecting surface (31) to the outer conductor contact (9),
wherein the first connecting surface (29) is insulated from the second connecting surface (31) by a dielectric (33), wherein the first connecting surface (29), the dielectric (33) and the second connecting surface (31) are connected one above the other, wherein the inner conductor (15), the outer conductor (17), the first connecting surface (29) and the second connecting surface (31) are arranged substantially parallel in an area, in which the inner conductor contacts the first connecting surface.

2. A plug connector according to Claim 1, wherein the diameter of the coaxial electrical conductor (13) is maximally 100 µm, in particular, maximally 85 µm, more particularly maximally 75 µm.

3. A plug connector according to any one of the preceding claims, wherein the plug contact (7) is not designed to be planar, in particular, wherein the outer conductor contact circumferentially surrounds the inner conductor contact.

4. A plug connector according to any one of the preceding claims, wherein the coaxial electrical conductor (13) is bonded at the second end onto the electronic component.

5. A plug connector according to any one of the preceding claims, which has several plug contacts (7), wherein the second connecting surface (31) contacts outer conductor contacts (9) of several plug contacts (7, 8).

6. A plug connector according to any one of the preceding claims, wherein several second connecting surfaces (31) are connected by means of a contact (35) through the dielectric (33).

7. A plug connector according to any one of the preceding claims, wherein the inner conductor (15) is bonded directly onto the inner conductor contact (11).

8. A plug connector according to any one of the preceding claims, which has at least two plug contacts, which are arranged above one another, wherein the plug connector has means for compensating for a time offset between signals of two plug contacts.

9. A plug connector according to any one of the preceding claims, wherein the circuit board (5) has a converter (37) for converting an optical signal into an electrical signal.

10. A plug connector according to Claim 9, wherein the transmission of an electrical signal from the converter (37) to the electrical plug contacts always takes place via a coaxial connection, in particular not a planar connection.

11. An optoelectronic transceiver with a plug connector according to any one of the preceding claims.

12. A plug connection with a first plug connector according to any one of Claims 1 to 10, which is connected to an optical fiber, with a second plug connector with coaxial plug contacts, wherein the second plug connector is connected to a coaxial cable.

## Revendications

1. Connecteur enfichable (1) destiné à la connexion d'une fibre optique (3) et d'un conducteur électrique, avec
- un circuit imprimé (5) qui comporte un composant (25) électronique ;
- au moins un contact à fiche (7) électrique qui comporte respectivement au moins un contact de conducteur intérieur (11) et un contact de conducteur extérieur (9) ;
- au moins un conducteur électrique (13) coaxial qui comporte au moins un conducteur intérieur (15), un conducteur extérieur (17) ainsi qu'un diélectrique (19) ;
le conducteur électrique (13) coaxial étant, à une première extrémité (21), connecté au contact à fiche (7) électrique,
le conducteur électrique (13) coaxial étant, à une deuxième extrémité (23), connecté directement au composant (25) électronique qui est disposé sur le circuit imprimé (5),
le conducteur intérieur (15) du conducteur électrique (13) coaxial étant, par le biais d'une première surface de connexion (29), mis en contact avec le contact de conducteur intérieur (11),
le conducteur extérieur (17) étant, par le biais d'au moins une deuxième surface de connexion (31), mis en contact avec le contact de conducteur extérieur (9),
la première surface de connexion (29) étant isolée de la deuxième surface de connexion (31) par un diélectrique (33), la première surface de connexion (29), le diélectrique (33) et la deuxième surface de connexion (31) étant disposés de façon superposée,
le conducteur intérieur (15), le conducteur extérieur (17), la première surface de connexion (29) et la deuxième surface de connexion (31) étant disposés de façon essentiellement parallèle dans une zone dans laquelle le conducteur intérieur entre en contact avec la première surface de connexion.

2. Connecteur enfichable selon la revendication 1, le diamètre du conducteur électrique (13) coaxial étant au maximum de 100 µm, en particulier au maximum de 85 µm, également en particulier au maximum de 75 µm.

3. Connecteur enfichable selon l'une des revendications précédentes, le contact à fiche (7) étant constitué de façon non plane, en particulier le contact de conducteur extérieur entourant de façon périphérique le contact de conducteur intérieur.

4. Connecteur enfichable selon l'une des revendications précédentes, le conducteur électrique (13) coaxial étant, à la deuxième extrémité, lié par bonding au composant électronique.

5. Connecteur enfichable selon l'une des revendications précédentes, lequel comporte plusieurs contacts à fiche (7), la deuxième surface de connexion (31) entrant en contact avec les contacts de conducteur extérieur (9) de plusieurs contacts à fiche (7, 8).

6. Connecteur enfichable selon l'une des revendications précédentes, plusieurs deuxièmes surfaces de connexion (31) étant raccordées par le biais d'un via (35) à travers le diélectrique (33) .

7. Connecteur enfichable selon l'une des revendications précédentes, le conducteur intérieur (15) étant lié par bonding directement sur le contact de conducteur intérieur (11).

8. Connecteur enfichable selon l'une des revendications précédentes, lequel comporte au moins deux contacts à fiche qui sont disposés de façon superposée, le connecteur enfichable comportant des moyens destinés à compenser un décalage temporel entre des signaux de deux contacts à fiche.

9. Connecteur enfichable selon l'une des revendications précédentes, le circuit imprimé (5) comportant un convertisseur (37) destiné à convertir un signal optique en un signal électrique.

10. Connecteur enfichable selon la revendication 9, la transmission d'un signal électrique à partir du convertisseur (37) vers les contacts électriques s'effectuant constamment par le biais d'une connexion coaxiale, en particulier d'une connexion non plane.

11. Emetteur-récepteur optoélectronique avec un connecteur enfichable selon l'une des revendications précédentes.

12. Connexion enfichable avec un connecteur enfichable selon l'une des revendications 1 à 10, lequel est connecté à une fibre optique, et avec un deuxième connecteur enfichable avec des contacts à fiche coaxiaux, le deuxième connecteur enfichable étant connecté à un câble coaxial.
